# EUROPEAN PATENT SPECIFICATION

(11) **EP 2 496 842 B1**
(45) Date of publication and mention of the grant of the patent: **12.03.2014**
(21) Application number: 10702187.5
(22) Date of filing: 26.01.2010
(51) Int. Cl.: F15B 3/00, F15B 11/032, F15B 15/02

(54) **COMPACT FORCE MULTIPLYING PNEUMATIC ACTUATOR**
KOMPAKTER KRAFTVERSTÄRKENDER PNEUMATIKZYLINDER
VERIN PNEUMATIQUE COMPACT MULTIPLICATEUR DE PUISSANCE

(30) Priority: 05.11.2009 US 258381 P
(43) Date of publication of application: 12.09.2012
(73) Proprietor: Parker-Hannifin Corporation, Cleveland, Ohio 44124-4141 (US)
(72) Inventor: NESBITT, Clay, Benicia California 94510 (US)
(74) Representative: Belcher, Simon James
(86) International application number: PCT/US2010/022029
(87) International publication number: WO 2011/056245

(56) References cited:
- CH-A- 313 843
- US-A- 4 791 856
- US-A- 5 215 286

## Description

This invention relates to pneumatic actuators. More specifically, this invention relates to a compact force multiplying pneumatic actuator. Still more specifically, this invention relates to such an actuator in which a spring biases an output member to a first position to close a valve, and pneumatic pressure moves the output member against the spring bias to a second position to allow the valve to open.

Pneumatic actuators are motion control devices that are used to cause and control motion. Such actuators commonly include a pneumatic chamber to which pneumatic pressure is selectively connected and vented, and a piston head in the chamber that is acted upon and moved by the pneumatic pressure. The movement of the piston head is transferred to an output member that is to be moved.

One type of pneumatic actuator includes a spring that biases the output member to a first or normal or at rest position. When the pneumatic pressure is connected to the pneumatic chamber so that it acts against and moves the piston, this movement of the piston causes the output member to move against the bias of the spring to a second or actuated position.

For certain uses of pneumatic actuators of this type, it is desirable to provide a high spring bias force and a resulting high output force of the output member. This high output force is able to move large loads to a first position and hold those loads in that position for indeterminate lengths of time without pneumatic pressure input. It is also desirable for pneumatic actuators of this type to overcome the bias of the high spring force, and cause and control movement of the output member to a second position, with low, readily available pneumatic pressure (commonly called shop air pressure). Furthermore, it is desirable to provide such a pneumatic actuator that is compact in size for use in confined spaces.

One application for pneumatic actuators of the general type described above is to operate high pressure valves that control the flow of high pressure fluid. In this application, the pneumatic actuator may be secured to a standard mounting arrangement on the high pressure valve, and the output member may control the operation of the valve. The spring biassed first position of the output member holds the valve in one position, and movement of the output member to its second position by operation of pneumatic pressure on the piston head allows the valve to move to another position.

CH-313843 discloses a control apparatus for a valve which includes an input diaphragm which is acted on by a return spring. The diaphragm is connected to a movable valve member by means of a control rod and a valve rod. The control and valve rods are connected to one another by means of a pair of levers

This invention provides a compact force multiplying pneumatic actuator, as defined in claim 1. A valve member assembly may also be provided.

The input member assembly, load beam assembly, output member assembly and biassing member assembly are disposed in a common housing in coaxial alignment. The input member may include one or more piston heads disposed in one end region of the housing, and the load beam assembly may include one or more force multiplying load beams disposed at an opposite end region of the housing. One or more biassing members and an output member may be disposed between the piston head(s) and the load beam(s).

The input member assembly may also include an input force transfer member that extends axially from one of the piston heads, and past the biassing member(s) and the output member, to operably connect with the load beam(s). The input force transfer member may be disposed radially between the biassing member(s) and the output member, so that the biassing member(s) and the output member are nested radially within the input force transfer member.

The input member assembly may also include one or more variable volume fluid pressure chamber defined by the housing and the piston head(s). Fluid pressure may be supplied to or vented from the fluid pressure chamber to move the piston head(s), and movement of the piston head(s) may be transferred to the load beams by the input force transfer member.

The load beam(s) may be disposed in a plane substantially perpendicular to the axis and may be mounted for pivotal movement about a pivot axis that provides a longer load beam arm and a shorter load beam arm. The input force transfer member may be operably connected to the longer load beam arm(s), and the shorter load beam arm(s) may be operably connected to cause movement of the output member against the bias of the biassing member(s).

The valve member assembly may include a valve member that is operably connected to open and close fluid flow in response to movement of the output member.

The input member assembly, load beam assembly, output member assembly, biassing member assembly, and valve member assembly may all have a first or normal or spring biassed position, in which the biassing member(s) retains such assemblies in such position when fluid pressure is vented from the variable volume fluid pressure chamber. When fluid pressure is supplied to the chamber, the piston head(s) may move axially and the input force transfer member may act against the longer arm(s) to pivot the load beam member(s) and cause the shorter arm(s) of the load beam members to act against the output member with a force that is multiplied by the mechanical advantage of the load beam(s). The movement of the output member is transferred to the valve member assembly by an output shaft that extends past the load beam assembly toward the valve member assembly. This causes the input member assembly, the load beam assembly, the output member assembly, the biassing member assembly, and the valve member assembly to all be moved to and retained in a second or actuated position.

The invention also provides various ones of the features and structures described in the claims set out below, alone and in combination, which claims are incorporated by reference in this summary of the invention.

Embodiments of this invention will now be described in further detail with reference to the accompanying drawings, in which:
Figure 1 is a perspective view of a pneumatic actuator according to a preferred embodiment incorporating certain principles of this invention.
Figure 2 is cross sectional side view along reference view line 2-2 in figure 1, showing the pneumatic actuator in a first position, and with a high pressure flow control valve connected with the actuator.
Figure 3 is an enlarged perspective view of a load beam assembly used in the pneumatic actuator shown in figures 1 and 2.
Figure 4 is a view similar to figure 2, but showing the pneumatic actuator in a second position and with the high pressure control valve removed.

The principles, embodiments and operation of the present invention are shown in the accompanying drawings and described in detail herein. These drawings and this description are not to be construed as being limited to the particular illustrative forms of the invention disclosed.

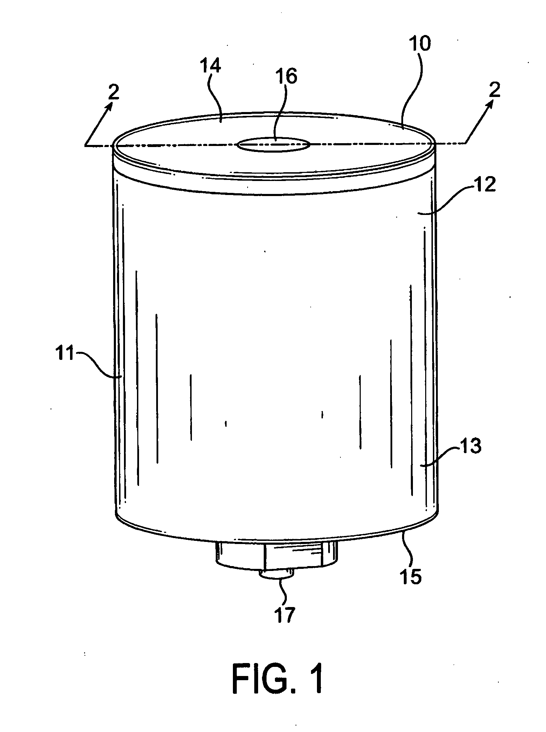

Figure 1 illustrates a compact force multiplying pneumatic actuator 10. The actuator 10 is a motion control device that receives fluid pressure as an input to cause and control mechanical motion. The actuator 10 includes a generally cylindrical, axial extending, cup shaped housing 11 that has a first axial end region 12 and a second axial end region 13. The end regions 12 and 13 are closed, respectively, by first and second end caps 14 and 15, and the end regions 12 and 13 extend axially from their respective end caps toward one another and meet at substantially the axial midpoint of the housing 11.

The first end cap 14 includes a fluid pressure port 16 that is externally connected to a source of fluid pressure through a pressure control valve that selectively connects the source to and vents the source from the port 16. In the preferred embodiment, the first end cap 14 is a separate part that is threaded into the housing 11, for ease of assembly of the various components of the actuator 10 from the top or first end region 12. Alternatively, the end cap 14 may be formed integral with the housing 11, for example, if the various components of the actuator 10 are to be assembled from the bottom or second end region 13. The housing 11 and end caps 14 and 15 and port 16 are all disposed along a longitudinal axis 18.

The pneumatic pressure source, the pressure control valve and the connection to the port 16 are well known and are not shown in figure 1. In the preferred embodiment, the source of fluid pressure provides pneumatic pressure to the port 16 at pressure in the range of about 4.5 bar to about 8.5 bar (about 65 pounds per square inch to about 125 pounds per square inch). This pressure range is referred to as "shop air" pressure, because it is the air pressure available from an air pressure storage chamber in many work shop areas. The lower level of this pressure range is the minimum design pressure for moving the actuator as described further below, and the upper level of this pressure range is the maximum design pressure, for the preferred embodiment shown in the drawings. Other alternative design pressures may be used, depending upon the application for the actuator 10.

The second end cap 15 includes a threaded connector and mechanical output port 17 that allows the actuator 10 to be removably connected to any device that is to be operated by the actuator 10 and that allows the output force of the actuator 10 to be transferred to such device. Alternative arrangements for removably or permanently connecting the actuator 10 to such device, such as bolted flange joints or snap ring joints or other known connector arrangements, may also be used. The second end cap 15 in the preferred embodiment is formed integral with the housing 11 for ease of manufacture. Alternatively, the end cap 15 may be a separate member. The operated device may be an electrical switch, a clutch, or any other device that requires motion control to move the device to and hold the device at a particular position. In the preferred embodiment of the invention, the operated device is a high pressure fluid control valve 20.

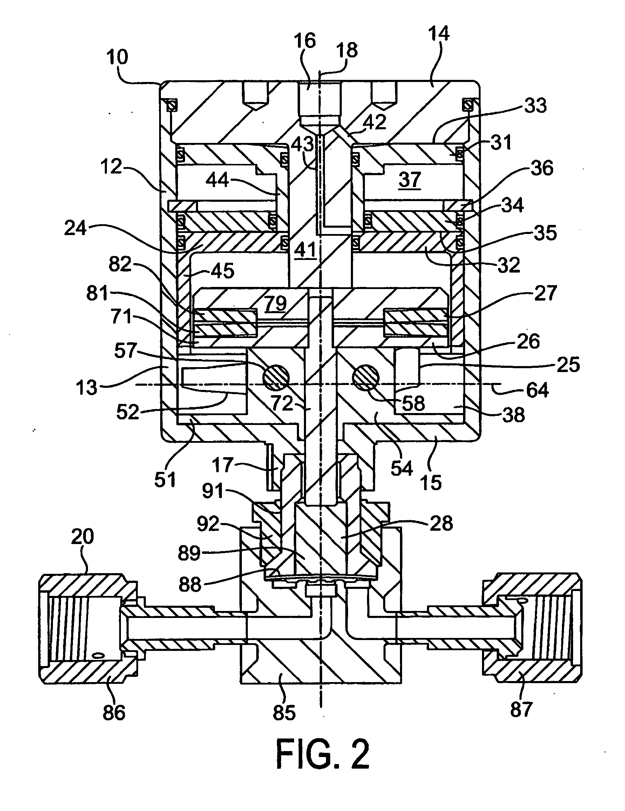

Referring now to figure 2, the actuator 10 is shown in cross section, in combination with its associated valve 20 which is also shown in cross section. The actuator 10 and valve 20 include an input member assembly 24, a load beam assembly 25, an output member assembly 26, a biassing member assembly 27, and a valve member assembly 28. Unless otherwise indicated in the drawings or description below, most of the component parts of the actuator 10 and the valve 20 are of stainless steel, preferably high carbon chromium stainless steel according to American Iron and Steel Institute specification 440-C condition A or American Society for Testing Materials specification A276.

The input member assembly 24 includes a first generally flat piston head 31 and a second generally flat piston head 32, each of which is axially slidable within the first end region 12 of the housing 11. The piston heads 31 and 32 each have a generally cylindrical outer periphery, and a suitable o-ring seal on the outer periphery of each piston head 31 and 32 provides slidable sealing engagement with the inner peripheral surface of the housing 11. The first piston head 31 and the housing 11 and the end cap 14 cooperatively define a first variable volume fluid pressure chamber 33, and the second piston head 32 and the housing 11 and a generally flat separation disk 34 cooperatively define a second variable volume fluid pressure chamber 35. The separation disk 34 includes generally cylindrical inner and outer peripheral surfaces, and each of those surfaces include circumferential grooves that carry suitable o-ring seals to provide slidable sealing engagement with its respective adjacent surface. A snap ring 36 is received in a circumferential groove in the inner peripheral surface of the first region 12 of the housing 11 to prevent movement of the separation disk in one axial direction within the housing 11, and fluid pressure in the second variable volume pressure chamber 35 and the second piston head 32 urge the separation disk against the snap ring 36. One or more holes (not shown) in the first end region 12 of the housing 11 extend radially completely through the housing 11 and communicate ambient atmospheric pressure from the outside of the housing 11 to the grove in which the snap ring 36 is disposed. These holes continuously vent to ambient atmospheric pressure a vent chamber 37 defined by the separation disk 34 and the interior peripheral surface of the first region of the housing 11 and the first piston head 12. Other holes (not shown) in the second end region 13 of the housing 11 extend radially completely through the housing 11 and communicate ambient atmospheric pressure from the outside of the housing 11 to another vent chamber 38 on the opposite side of the piston head 32 from the pressure chamber 35

The end cap 12 includes a central cylindrical guide and stop member 41 that extends axially from the end cap 12 toward the output member assembly 26. In the preferred embodiment, the guide and stop member 41 is formed integral with the end cap 12, but alternatively the member 41 may be a separate piece that may be attached to the end cap 12 by a treaded connection or any other suitable connection device. The end cap 12 and the guide and stop member 41 include central passages 42 and 43 that establish open fluid pressure communication between the fluid pressure port 16 and the variable volume fluid pressure chambers 33 and 35, respectively. A first generally cylindrical input force transfer member 44 extends axially from the first piston head 31, and the inner peripheral surface of the member 44 slides relative to the outer peripheral surface of the guide and stop member 41 to guide axial movement of the piston head 31, maintain proper alignment of the piston head 31 within the housing 11, and transfer force from the piston head 31 to the piston head 32 in a manner more fully described below. In the preferred embodiment, the input force transfer member 44 is formed integral with the piston head 31.

A second generally cylindrical input force transfer member 45 extends axially from the second piston head 32, past the output member assembly 26 and biassing member assembly 27, toward the load beam assembly 25. In the preferred embodiment, the input force transfer member 45 is formed integral with the piston head 32. The member 45 guides axial movement of the piston head 32, maintains proper alignment of the piston head 32 within the housing 11, and transfers force from the piston head 32 to the load beam assembly 25 in a manner more fully described below. The force transfer member 45 is disposed radially between the housing 11 and each of the output member assembly 26 and biassing member assembly 27, so that the output member assembly 26 and the biassing member assembly 27 are nested within the member 45 as the member moves axially within the housing 11 to operate the load beam assembly 25 as more fully described below.

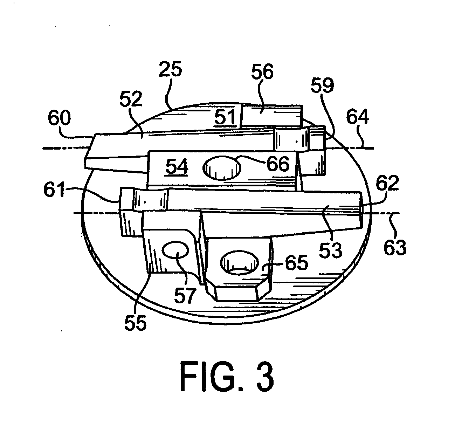

Referring now to figures 2 and 3 together, the load beam assembly 25 includes a load beam mounting plate 51, load beams 52 and 53, load beam mounting blocks 54, 55 and 56, and pivot pins 57 and 58. The load beam mounting plate 51 is a generally flat round plate that rests against the end cap 15 during operation of the actuator 10. The centre mounting block 54 and the blocks 55 and 56 are formed integral with the mounting plate 51. Alternatively, some or all of the mounting blocks could be separate parts that are secured to the mounting plate 51 by suitable threaded fasteners or other appropriate means. Also, the load beam mounting plate 51 could provide a removable end cap for the end region 13 or bottom of the housing 11 in place of the integral end cap 15 shown in the drawings, particularly if the components of the actuator 10 are to be assembled into the housing 11 from the end region 13 or bottom of the housing 11.

The pivot pin 57 extends through suitable holes in the mounting blocks 55 and 54 to pivotally locate the load beam 53 about a pivot axis defined by the pivot pin 57. Similarly, the pivot pin 58 extends through suitable holes in the mounting blocks 56 and 54 to pivotally locate the load beam 52 about a pivot axis defined by the pivot pin 58. If desired, suitable bearings (not shown) can be arranged on the pivot pins 57 and 58 to reduce friction and wear as the load beams move about their respective pivot axes. The load beam 52 includes first and second arms that extend from the pivot axis laterally outwardly to first and second ends 60 and 59, with the length of the first arm being substantially greater than the length of the first arm. Similarly, the load beam 53 includes first and second arms that extend from the pivot axis laterally outwardly to first and second ends 62 and 61, with the length of the first arm being substantially greater than the length of the first arm. The length of each of the first arms is more than two times greater, and preferably more than three times greater, than the length of the shorter arms. Also, the length of each load beam 52 and 53 in the preferred embodiment is at least about eighty percent of the diameter of the inside of the housing 11, to provide maximum mechanical advantage and length of travel and symmetrical distribution of actuation force against the output member assembly 26 by the shorter arms during operation as described further below. Alternatively, other lengths of the load beams, numbers of load beams, and mechanical advantage may be provided, depending upon the desired size of the actuator and available pneumatic pressure and output force and travel requirements for the actuator 10. For example, the load beams may be arranged in a more generally radial direction, with shorter load beams and greater numbers of load beams, particularly if compact size and high output force are not critical.

The load beams 52 and 53 in figures 2 and 3 are disposed in a normal or spring biassed or at rest position, as more fully described below. In this position, the load beam 52 and its ends 59 and 60 and its pivot axis about the pivot pin 57 are disposed along a longitudinal axis 63 that is substantially perpendicular to the longitudinal axis 18 of the housing 11. The term substantially perpendicular means about ninety degrees, plus or minus about twenty degrees. Similarly, the load beam 53 is also disposed in a normal or spring biassed or at rest position as viewed in figures 2 and 3, as more fully described below. In this position, the load beam 53 and its ends 61 and 62 and its pivot axis about the pivot pin 58 are disposed along an axis 64 that is substantially perpendicular to the longitudinal axis 18 of the housing 11.

A central guide opening 66 in the mounting plate 54 and a limit switch mounting block 65 are also provided by the load beam assembly 25. The central guide opening 66 maintains alignment of other components of the actuator 10, as described further below. The limit switch mounting block includes a threaded opening that is aligned with a corresponding opening in the load beam plate 51. A limit switch (not shown) is threaded into the opening in the load beam plate 51 and the opening in the mounting block 65, to provide a signal to indicate the position of the load beam 53 and thereby provide a signal to indicate the position of the output member assembly 26. If a limit switch is not to be used, a suitable plug is threaded into the opening in the load beam plate 51 and the opening in the mounting block 65, to prevent contaminants from entering the interior of the housing 11.

Referring again to figure 2, the output member assembly 26 includes an output member plate 71. The output member plate 71 is held against the block 54 in a first or normal or at rest position shown in figure 2 by the biassing member assembly 27, as more fully described below. An output member actuator 72 is secured for movement with the output member plate 71 and is also shown in its first or normal or at rest position in figure 2. The output member actuator 72 extends axially from the output member plate 71, through the guide opening 66, and into the connector and mechanical output port 17, to cause and control movement of the valve 20 or other device that is to be actuated. The output member 71 is disposed within the housing 11, axially between the input member assembly 24 and the load beam assembly 25, and radially inwardly of the input force transfer member 45.

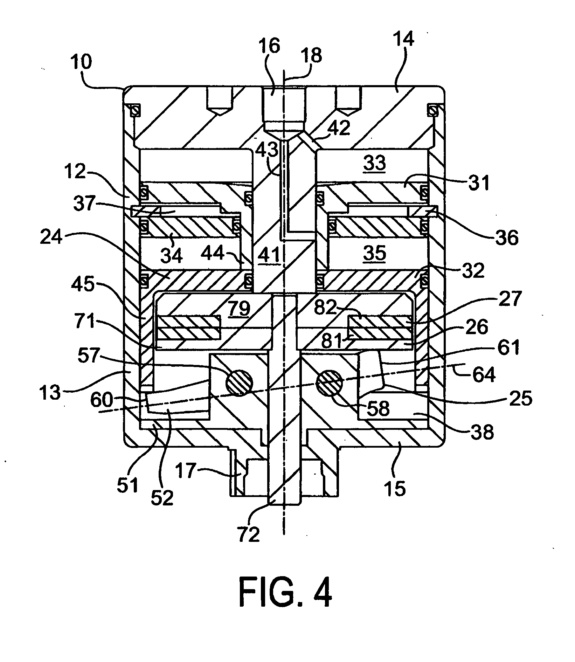

The biassing member assembly 27 includes a stationary bias plate 79 and springs 81 and 82. The bias plate 79 is retained against the guide and stop member 41 under all operating conditions, to provide a stationary plate for the springs 81 and 82 to act against. The springs 81 and 82 may be any suitable spring device, and in the preferred embodiment the springs 81 and 82 are Belleville springs arranged in a series configuration to provide high spring force and high axial travel from a first or normal position shown in figure 2 to a second or actuated position shown in figure 4 and more fully described below. The end of the springs 81 and 82 that is moveable acts against the output member plate 71 under all conditions. The biassing member assembly 27 and its biassing members 81 and 82 are disposed within the housing 11, axially between the input member assembly 24 and the load beam assembly 25, axially between the output member plate 71 and the input member assembly 24, and radially inwardly of the input force transfer member 45. When the biassing member assembly 27 is in its first or normal position shown in figure 2, the biassing members 81 and 82 are in a partially compressed position to apply a high force to bias the output member plate 71 firmly against the block 54 and to retain the output member plate 71 in this first or at rest or spring biassed position against any opposing forces. In the preferred embodiment, the force applied by the biassing members 81 and 82 against the output member 71 in their first positions is in the range of about 175 to about 275 kilograms (about 400 to 600 pounds).

The valve 2 and valve member assembly 28 are well known and include a valve housing 85, fluid ports 86 and 87 that are connected to place the valve member assembly 28 in a fluid flow stream in a fluid system (not shown) to control flow of fluid, a flexible valve member 88, and a valve member actuator 89. A first connector 91 is in threaded releasable engagement with the output port 17 of the actuator 10, and a second connector 92 is in threaded engagement with the valve housing 85 to connect the first connector 91 to the valve housing 85. The valve member actuator 89 and valve member 88 are shown in figure 2 in a first of closed position to close and prevent the flow of fluid through the valve housing 85 between the ports 86 and 87. The actuator 10 in this position (which is the first or spring biassed or actuated position of the actuator 10 and its components) applies a constant high force from the output member 71 through the output member actuator 72 and against the valve member actuator 89 to retain the valve member 88 in this closed position. This constant high force is sufficiently great that it overcomes the opposing force created by fluid pressure in the valve 20 that acts against the valve member 88 in a direction to try to open the valve member 88. During this mode of operation, the pneumatic pressure in the variable volume chambers 33 and 35 is vented to atmospheric pressure. The piston heads 31 and 32 remain in their first or at rest positions shown in figures 2, and the first and second input force transfer members 44 and 45 do not apply a significant force against the load beam assembly 25.

When it is desired to open the valve 20, the actuator 10 moves from its first or at rest position shown in figure 2 to its second or actuated position shown in figure 4. To accomplish this, pneumatic pressure in the range provided by shop air pressure is supplied through the port 16 and the passages 42 and 43 to the variable volume chambers 33 and 35 of the actuator 10. Because the vent chambers 37 and 38 remain at ambient atmospheric pressure during all conditions, the first piston head 31 and the second piston head 32 begin to move away from their respective first or at rest positions in a direction toward the load beam assembly 25 until the second input force transfer member 45 engages the longer arms of each of the load beams 52 and 53. As this is occurring, a first input force created by the pneumatic pressure in the first chamber 33 acting against the first piston head 31 is transferred to the second piston head 32 by the first input force transfer member 44. This first input force, plus a second input force of substantially equal magnitude created by the pneumatic pressure in the second chamber 35 acting against the second piston head 32, provides a total input force that is transferred by the force transfer member 45 to the ends 60 and 62 of the longer arms of the load beams 52 and 53, respectively.

When the pneumatic pressure in the chambers 33 and 35 reaches a sufficiently high level, the total input force acting against the longer arms of the load beams 52 and 53 causes the ends 60 and 62 of the longer arms to begin to move axially in a direction away from the biassing members 81 and 82. The load beams 52 and 53 then begin to pivot about their respective pivot axes defined by the pivot pins 56 and 57, respectively. This causes the ends 59 and 60 of the shorter arms of the load beams 52 and 53 to begin to move against the output member 71 toward the biassing members 81 and 82, to move the output member 71 in a direction reduce the normal or at rest force on the valve actuator member 89 and to further compress the springs 81 and 82. Because the longer arms are a multiple of the length of the shorter arms, a mechanical advantage is provided by the load beams 52 and 53. The force acting against the output plate 71 by the shorter arms of the load beams 52 and 53 to move the output plate 71 away from its first or normal or at rest position shown in figure 2 is a multiple of the above mentioned total input force provided by the input member assembly 24. This movement of the output plate 71 causes the output actuator 72 to move away from the valve actuator 89 and valve member 88, so that fluid pressure in the valve 20 acting against the valve member 88 moves the valve member 88 away from its valve seat to begin to open fluid flow through the valve 20.

This movement continues, until the input member assembly 24 and the load beam assembly 25 and the output member assembly 26 and the biassing member assembly 27 are all in the actuated positions shown in figure 4 and the valve member assembly 28 is fully open. Referring to figure 4, the pneumatic pressure in the chambers 33 and 35 has moved the piston heads 32 and 33 to, and holds the piston heads 32 and 33 at, a second or actuated position shown in figure 4. In this actuated position, the input force transfer member 45 transfers the combined forces created by the pneumatic pressure in the chambers 33 and 35 acting against the lateral cross sectional areas of the piston heads 31 and 32 exposed to such pressure to the ends 60 and 62 of the load beams 52 and 53, respectively. This force applied against the longer arms of the load beams 52 and 53 is multiplied by the mechanical advantage of the load beams 52 and 53 and moves the output plate 71 to and retains the output plate 71 at its actuated position shown in figure 4. The biassing members 81 and 82 in this position with the valve member 20 open are further compressed, and the spring bias force of the biassing members 81 and 82 is at a maximum. This maximum force of the biassing member assembly 27 is available to return the actuator 10 to its first or at rest position and to close the valve 20 when desired. In the preferred embodiment, the axial force provided by the biassing members 81 and 82 against the output member 71 is in the range of about 450 to about 550 kilograms (about 1000 to 1200 pounds), and the travel of the output member 71 from its first position to its second position is in the range of about 0.7 millimetres to about 1.5 millimetres (0.030 inches to about 0.060 inches). Other biassing forces and travel distances may alternatively be provided, depending upon the requirements of the device that is to be operated by the actuator 10.

When the load beam 52 is moved to this second or actuated position shown if figure 4 to allow the valve 20 to open, the axis 63 is rotated from its first position shown in figure 2 to a position shown in figure 4. Additionally, when this occurs, the longer arm of the load beam 52 is moved in a direction axially away from the biassing member assembly 27 and the shorter arm or the load beam 52 is moved in a direction axially toward the biassing member 27. Similarly, when the load beam 53 is moved to its second or actuated position shown in figure 4, the axis 64 is also rotated from-its first position shown in figure 2 to a position shown in figure 4. Also, when this occurs, the longer arm of the load beam 53 is moved in a direction axially away from the biassing member assembly 27 and the shorter arm of the load beam 53 is moved in a direction axially toward the biassing member 27. Because the input force transfer member 45 is disposed radially between the housing 11 and the output member 71 and biassing members 81 and 82, this pivotal rotation of the short arms of the load beams 52 and 53 and the compression of the biassing members 81 and 82 occurs radially inside the force transfer member 45, to reduce the axial length of the actuator 10. Additionally, the pivotal movement of the longer arms of the load beams 52 and 53 is caused by the force transfer member 45 at a location adjacent the housing 11, to further provide the maximum length of the load beams 52 and 53 without increasing the axial length of the actuator 10.

The valve 20 remains in its open position until the pneumatic pressure in the chambers 33 and 35 is released and the chambers 33 and 35 are vented to atmosphere. This reduces and releases the force of the force transfer member 45 acting against the longer arms of the load beams 52 and 53, to reduce and release the force of the smaller arms of the load beams 52 and 53 acting against the output plate 71. This permits the load beams 52 and 53 to pivot about their respective pivot axes back to the first or at rest positions shown in figures 2 and 3 as the valve 20 is closed. The force that initiates this movement is the above mentioned force of the biassing members 81 and 82 in their actuated positions.

## Claims

1. An actuator (10) comprising:
an input member (31, 32) moveable axially between a normal position and an actuated position,
a load beam (52, 53) having a first end (60, 62) and a second end (59, 61), said load beam being pivotally mounted at a pivot location (57, 58) between said first end and said second end for pivotal movement between a normal position and an actuated position, the distance between said pivot location (57, 58) and said first end (60, 62) being greater than the distance between said pivot location and said second end (59, 61), the load beam (52, 53) being operably engaged by said input member (31, 32) substantially at said first end and said input member holding said load beam in its said actuated position when said input member is in its said actuated position,
an output member (71) disposed axially between said input member (31, 32) and said load beam (52, 53), said output member being moveable axially between a normal position and an actuated position, and being operably connected to the load beam substantially at the second end (59, 61) of the load beam so that the output member is held in its actuated position by the load beam when the load beam is in its actuated position, and
a biassing member (81, 82) having a normal position and an actuated position, the biassing member operably engaging said output member (71) and biassing said output member to its said normal position when said biassing member is in its said normal position.

2. An actuator as set forth in claim 1, which includes a housing (11), in which said input member (31, 32), said output member (71), said load beam (52, 53), and said biassing member (81, 82) are all disposed within said housing, and said biassing member is disposed axially between said input member and said load beam.

3. An actuator as set forth in claim 2, in which:
said housing (11) is generally cylindrical and has a first axial end region (12) and a second axial end region (13),
said input member (31, 32) is located within said first axial end region,
said load beam (52, 53) is located within said second axial end region, and
said load beam includes a longitudinal axis substantially perpendicular to said axis of said housing when said load beam is in said normal position.

4. An actuator as set forth in claim 3, which includes a fluid pressure chamber (33, 35) disposed within said first axial end region, said fluid pressure chamber having a normal volume and an actuated volume, said actuated volume being substantially greater than said normal volume, and
in which said input member includes a piston head (31, 32) having an axial cross sectional area exposed to and acted upon by the fluid pressure within said fluid pressure chamber.

5. An actuator as set forth in claim 4, in which said actuator further includes an input force transfer member (45), and said input force transfer member extends axially from said piston head (32), past said biassing member and said output member, to said load beam when said input member is in said actuated position.

6. An actuator as set forth in claim 5, in which said input force transfer member (45) is disposed within said housing radially outwardly of said biassing member (81, 82) and radially outwardly of said output member (71), whereby said output member and said biassing member are nested radially within said input force transfer member in their respective positions axially between said load beam and said input member.

7. An actuator as set forth in claim 2 or claim 6, which includes an output shaft (72), said output shaft being operably connected to said output member, and said output shaft extending axially from said output member and past said load beam.

8. An actuator as set forth in claim 7, in which said output member is disposed axially between said load beam and said biassing member.

9. An actuator as set forth in claim 8, which includes a stationary member (79) located axially between said piston head and said load beam, and said biassing member (81, 82) acting between said stationary member and said output member.

10. An actuator as set forth in claim 3 or claim 9, in which said biassing member includes a Belleville spring (81, 82), said housing has an inside diameter, said load beam (52, 53) has a length, and said length of said load beam is at least about eighty percent of said inside diameter of said housing.

11. An actuator as set forth in claim 3 or claim 9, which includes another fluid pressure chamber (33) disposed within said housing, said other fluid pressure chamber having a normal volume and an actuated volume, said actuated volume being substantially greater than said normal volume, and
said input member including another piston head (31) having an axial cross sectional area exposed to and acted upon by the fluid pressure within said other fluid pressure chamber, and
said other piston head being operably connected to said first mentioned piston head (32) for axial movement therewith.

12. An actuator as set for the in any of claims 1, 7, 10 or 11, which includes:
a valve (2) connected to said housing (11) at said second end region (13), said valve including a valve element (88) controlling fluid pressure communication through said valve,
and said output member (71) being operably connected to said valve element and moving said valve element to and holding said valve element at a predetermined position when said output member is in its said normal position.

## Patentansprüche

1. Ein Aktuator (10) mit
einem Eingangsglied (31, 32), das zwischen einer Normalstellung und einer Betätigungsstellung axial beweglich ist,
einem Lastbalken (52, 53) mit einem ersten Ende (60, 62) und einem zweiten Ende (59, 61), wobei der Lastbalken schwenkbar an einem Schwenkpunkt (57, 58) zwischen dem ersten Ende und dem zweiten Ende für eine Schwenkbewegung zwischen einer Normalstellung und einer Betätigungsstellung befestigt ist, wobei der Abstand zwischen dem Schwenkpunkt (57, 58) und dem ersten Ende (60, 62) größer ist als der Abstand zwischen dem Schwenkpunkt und dem zweiten Ende (59, 61), wobei der Lastbalken (52, 53) von dem Eingangsglied (31, 32) im Wesentlichen bei dessen ersten Ende wirksam erfasst wird und das Eingangsglied den Lastbalken in seiner Betätigungsstellung hält, wenn das Eingangsglied sich in seiner Betätigungsstellung befindet,
einem Ausgangsglied (71), das axial zwischen dem Eingangsglied (31, 32) und dem Lastbalken (52, 53) angeordnet ist, wobei das Ausgangsglied axial zwischen einer Normalstellung und einer Betätigungsstellung beweglich ist, und das mit dem Lastbalken im Wesentlichen bei dem zweiten Ende (59, 61) des Lastbalkens wirksam verbunden ist, so dass das Ausgangsglied durch den Lastbalken in seiner Betätigungsstellung gehalten wird, wenn der Lastbalken sich in seiner Betätigungsstellung befindet, und mit einem Vorspannelement (81, 82), das eine Normalstellung und eine Betätigungsstellung hat, wobei das Vorspannelement wirksam an dem Ausgangsglied (71) angreift und das Ausgangsglied in seine Normalstellung vorspannt, wenn das Vorspannelement sich in seiner Normalstellung befindet.

2. Ein Aktuator nach Anspruch 1, welcher ein Gehäuse (11) umfasst, in welchem das Eingangsglied (31, 32), das Ausgangsglied (71), der Lastbalken (52, 53) und das Vorspannelement (81, 82) sämtlich angeordnet sind, und wobei das Vorspannelement axial zwischen dem Eingangsglied und dem Lastbalken angeordnet ist.

3. Ein Aktuator nach Anspruch 2, bei welchem
das Gehäuse (11) im Wesentlichen zylindrisch ist und einen ersten axialen Endbereich (12) und einen zweiten axialen Endbereich (13) hat,
das Eingangsglied (31, 32) in dem ersten axialen Endbereich angeordnet ist,
der Lastbalken (52, 53) in dem zweiten axialen Endbereich angeordnet ist und
der Lastbalken eine longitudinale Achse umfasst, die im Wesentlichen senkrecht zur Achse des Gehäuses steht, wenn der Lastbalken sich in seiner Normalstellung befindet.

4. Ein Aktuator nach Anspruch 3, welcher eine Fluid-Druckkammer (33, 35) umfasst, die in dem ersten axialen Endbereich angeordnet ist, wobei die Fluid-Druckkammer ein Normalvolumen und ein Betätigungsvolumen hat, wobei das Betätigungsvolumen im Wesentlichen größer ist als das Normalvolumen, und wobei
das Eingangsglied einen Kolbenkopf (31, 32) umfasst, der eine axiale Querschnittsfläche hat, welche dem Fluiddruck in der Fluid-Druckkammer ausgesetzt ist und auf welche der Fluiddruck wirkt.

5. Ein Aktuator nach Anspruch 4, bei welchem der Aktuator ferner ein Eingangskraftübertragungsglied (45) umfasst und das Eingangskraftübertragungsglied sich axial von dem Kolbenkopf (32) hinter das Vorspannelement und das Ausgangsglied zu dem Lastbalken erstreckt, wenn das Eingangsglied sich in der Betätigungsstellung befindet.

6. Ein Aktuator nach Anspruch 5, bei welchem das Eingangskraftübertragungsglied (45) innerhalb des Gehäuses radial außerhalb des Vorspannelements (81, 82) und radial außerhalb des Ausgangsglieds (71) angeordnet ist, wobei das Ausgangsglied und das Vorspannelement radial innerhalb des Eingangskraftübertragungsgliedes in ihren entsprechenden Stellungen axial zwischen dem Lastbalken und dem Eingangsglied aufgenommen sind.

7. Ein Aktuator nach Anspruch 2 oder Anspruch 6, welcher einen Ausgangsschaft (72) umfasst, wobei der Ausgangsschaft wirksam mit dem Ausgangsglied verbunden ist und der Ausgangsschaft sich axial von dem Ausgangsglied hinter den Lastbalken erstreckt.

8. Ein Aktuator nach Anspruch 7, bei welchem das Ausgangsglied axial zwischen dem Lastbalken und dem Vorspannelement angeordnet ist.

9. Ein Aktuator nach Anspruch 8, welcher ein feststehendes Element (79) umfasst, das axial zwischen dem Kolbenkopf und dem Lastbalken angeordnet ist, und bei welchem das Vorspannelement (81, 82) zwischen dem feststehenden Element und dem Ausgangsglied wirkt.

10. Ein Aktuator nach Anspruch 3 oder Anspruch 9, bei welchem das Vorspannelement eine Belleville-Feder (81, 82) umfasst, das Gehäuse einen Innendurchmesser hat, der Lastbalken (52, 53) eine Länge hat und bei welchem die Länge des Lastbalkens mindestens etwa 80 Prozent des Innendurchmessers des Gehäuses beträgt.

11. Ein Aktuator nach Anspruch 3 oder Anspruch 9, welcher eine weitere Fluid-Druckkammer (33) umfasst, die in dem Gehäuse angeordnet ist, wobei die weitere Fluid-Druckkammer ein Normalvolumen und ein
Betätigungsvolumen hat, wobei das Betätigungsvolumen im Wesentlichen größer als das Normalvolumen ist, und
das Eingangsglied einen weiteren Kolbenkopf (31) mit einer axialen Querschnittsfläche umfasst, welche dem Fluiddruck in der weiteren Fluid-Druckkammer ausgesetzt ist und auf welche der Fluiddruck wirkt, und
der weitere Kolbenkopf wirksam mit dem zuerst aufgeführten Kolbenkopf (32) für eine Axialbewegung mit diesem verbunden ist.

12. Ein Aktuator nach einem der Ansprüche 1, 7, 10 oder 11, welcher umfasst:
ein Ventil (2), das mit dem Gehäuse (11) bei dem zweiten Endbereich (13) verbunden ist, wobei das Ventil ein Ventilelement (88) umfasst, das die Fluiddruckkommunikation durch das Ventil steuert; und wobei das Ausgangsglied (71) wirksam mit dem Ventilelement verbunden ist und das Ventilelement in eine vorgegebene Stellung bewegt und das Ventilelement in dieser hält, wenn das Ausgangsglied sich in seiner Normalstellung befindet.

## Revendications

1. Actionneur (10) comprenant :
un organe d'entrée (31, 32) axialement mobile entre une position normale et une position actionnée,
une poutre de charge (52, 53) ayant une première extrémité (60, 62) et une seconde extrémité (59, 61), ladite poutre de charge étant montée de façon pivotante au niveau d'un emplacement de pivot (57, 58) entre ladite première extrémité et ladite seconde extrémité pour un mouvement de pivotement entre une position normale et une position actionnée, la distance entre ledit emplacement de pivot (57, 58) et ladite première extrémité (60, 62) étant supérieure à la distance entre ledit emplacement de pivot et ladite seconde extrémité (59, 61), la poutre de charge (52, 53) étant opérationnellement mise en prise par ledit organe d'entrée (31, 32) sensiblement au niveau de ladite première extrémité et ledit organe d'entrée maintenant ladite poutre de charge dans sa position actionnée lorsque ledit organe d'entrée est dans sa position actionnée,
un organe de sortie (71) disposé axialement entre ledit organe d'entrée (31, 32) et ladite poutre de charge (52, 53), ledit organe de sortie étant axialement mobile entre une position normale et une position actionnée, et étant opérationnellement raccordé à la poutre de charge sensiblement au niveau de la seconde extrémité (59, 61) de la poutre de charge de sorte que l'organe de sortie soit maintenu dans sa position actionnée par la poutre de charge lorsque la poutre de charge est dans sa position actionnée, et
un organe de sollicitation (81, 82) ayant une position normale et une position actionnée, l'organe de sollicitation mettant opérationnellement en prise ledit organe de sortie (71) et sollicitant ledit organe de sortie dans sa dite position normale lorsque ledit organe de sollicitation est dans sa dite position normale.

2. Actionneur selon la revendication 1, qui comprend un logement (11) dans lequel ledit organe d'entrée (31, 32), ledit organe de sortie (71), ladite poutre de charge (52, 53), et ledit organe de sollicitation (81, 82) sont tous disposés à l'intérieur dudit logement, et ledit organe de sollicitation est disposé axialement entre ledit organe d'entrée et ladite poutre de charge.

3. Actionneur selon la revendication 2, dans lequel :
ledit logement (11) est généralement cylindrique et a une première région d'extrémité axiale (12) et une seconde région d'extrémité axiale (13),
ledit organe d'entrée (31, 32) est situé à l'intérieur de ladite première région d'extrémité axiale,
ladite poutre de charge (52, 53) est située à l'intérieur de ladite seconde région d'extrémité axiale, et
ladite poutre de charge comprend un axe longitudinal sensiblement perpendiculaire audit axe dudit logement lorsque ladite poutre de charge est dans ladite position normale.

4. Actionneur selon la revendication 3, qui comprend une chambre de pression de fluide (33, 35) disposée à l'intérieur de ladite première région d'extrémité axiale, ladite chambre de pression de fluide ayant un volume normal et un volume actionné, ledit volume actionné étant sensiblement supérieur audit volume normal, et
dans lequel ledit organe d'entrée comprend une tête de piston (31, 32) ayant une aire en coupe axiale exposée à et sur laquelle agit la pression de fluide à l'intérieur de ladite chambre de pression de fluide.

5. Actionneur selon la revendication 4, dans lequel ledit actionneur comprend en outre un organe de transfert de force d'entrée (45), et ledit organe de transfert de force d'entrée s'étend axialement de ladite tête de piston (32), au-delà dudit organe de sollicitation et dudit organe de sortie, vers ladite poutre de charge lorsque ledit organe d'entrée est dans ladite position actionnée.

6. Actionneur selon la revendication 5, dans lequel ledit organe de transfert de force d'entrée (45) est disposé à l'intérieur dudit logement radialement vers l'extérieur dudit organe de sollicitation (81, 82) et radialement vers l'extérieur dudit organe de sortie (71), moyennant quoi ledit organe de sortie et ledit organe de sollicitation sont emboîtés radialement à l'intérieur dudit organe de transfert de force d'entrée dans leurs positions respectives axialement entre ledit poutre de charge et ledit organe d'entrée.

7. Actionneur selon la revendication 2 ou la revendication 6, qui comprend un arbre de sortie (72), ledit arbre de sortie étant opérationnellement raccordé audit organe de sortie, et ledit arbre de sortie s'étendant axialement dudit organe de sortie et au-delà de ladite poutre de charge.

8. Actionneur selon la revendication 7, dans lequel ledit organe de sortie est disposé axialement entre ladite poutre de charge et ledit organe de sollicitation.

9. Actionneur selon la revendication 8, qui comprend un organe stationnaire (79) situé axialement entre ladite tête de piston et ladite poutre de charge, et ledit organe de sollicitation (81, 82) agissant entre ledit organe stationnaire et ledit organe de sortie.

10. Actionneur selon la revendication 3 ou la revendication 9, dans lequel ledit organe de sollicitation comprend un ressort à rondelles coniques (81, 82), ledit logement a un diamètre interne, ladite poutre de charge (52, 53) a une longueur, et ladite longueur de ladite poutre de charge est au moins d'environ 80 % dudit diamètre interne dudit logement.

11. Actionneur selon la revendication 3 ou la revendication 9, qui comprend une autre chambre de pression de fluide (33) disposée à l'intérieur dudit logement, ladite autre chambre de pression de fluide ayant un volume normal et un volume actionné, ledit volume actionné étant sensiblement supérieur audit volume normal, et
ledit organe d'entrée comprenant une autre tête de piston (31) ayant une aire en coupe axiale exposée à et sur laquelle agit la pression de fluide à l'intérieur de ladite autre chambre de pression de fluide, et
ladite autre tête de piston étant opérationnellement raccordée à ladite première tête de piston (32) mentionnée pour un mouvement axial avec celle-ci.

12. Actionneur selon l'une quelconque des revendications 1, 7, 10 ou 11, qui comprend :
une soupape (2) raccordée audit logement (11) au niveau de ladite seconde région d'extrémité (13), ladite soupape comprenant un élément de soupape (88) régulant la communication de pression de fluide à travers ladite soupape,
et ledit organe de sortie (71) étant opérationnellement raccordé audit élément de soupape et déplaçant ledit élément de soupape vers et maintenant ledit élément de soupape en une position prédéterminée lorsque ledit organe de sortie est dans sa dite position normale.
